# EUROPÄISCHE PATENTSCHRIFT

(11) **EP 1 166 528 B1**
(45) Veröffentlichungstag und Bekanntmachung des Hinweises auf die Patenterteilung: **19.05.2004**
(21) Anmeldenummer: 00917029.1
(22) Anmeldetag: 31.03.2000
(51) Int. Cl.: H04L 29/12, H04M 7/00

(54) **VERFAHREN ZUM AUFBAU VON VERBINDUNGEN ZWISCHEN ZWEI KOMMUNIKATIONSPARTNERN IN EINEM KOMMUNIKATIONSSYSTEM MIT EINER DYNAMISCHEN ADRESSZUTEILUNG**
METHOD FOR ESTABLISHING CONNECTIONS BETWEEN TWO COMMUNICATION PARTNERS IN A COMMUNICATIONS SYSTEM HAVING A DYNAMIC ADDRESS ALLOCATION
PROCEDE PERMETTANT D'ETABLIR DES COMMUNICATIONS ENTRE DEUX INTERLOCUTEURS DANS UN SYSTEME DE COMMUNICATION AVEC AFFECTATION DYNAMIQUE DES ADRESSES

(30) Priorität: 01.04.1999 DE 19914876
(43) Veröffentlichungstag der Anmeldung: 02.01.2002
(73) Patentinhaber: Hensiek, Jobst, 38640 Goslar (DE)
(72) Erfinder: Hensiek, Jobst, 38640 Goslar (DE)
(74) Vertreter: Einsel, Martin
(86) Internationale Anmeldenummer: PCT/EP2000/002895
(87) Internationale Veröffentlichungsnummer: WO 2000/060827

(56) Entgegenhaltungen:
- EP-A- 0 905 959
- WO-A-97/14234

## Beschreibung

Die Erfindung betrifft ein Verfahren zum Aufbau von Verbindungen zwischen zwei Kommunikationspartnern in einem Kommunikationssystem mit einer dynamischen Adresszuteilung.

In Kommunikationssystemen, wie beispielsweise dem Telefonnetz, gibt es häufig statische Adressen. Über diese statischen Adressen, im Telefonnetz durch die Telefonnummern repräsentiert, werden Punkt-zu-Punkt-Verbindungen aufgebaut. Die Kosten für solche Verbindungen sind zeit-, entfemungs- und volumenabhängig. Auch wenn die Kosten für solche Verbindungen in den vergangenen Jahren deutlich gefallen sind, sind sie nach wie vor relativ hoch, vor allem wenn große Datenmengen oder Datenströme über große Distanzen, wie etwa bei Bildverbindungen übermittelt werden sollen.

Die Kommunikationssysteme mit einer dynamischen Adresszuteilung sind im Regelfall kostengünstiger. Hier ist es problematisch, dass im Regelfall die dynamische Adresse des jeweiligen Ansprechpartners nicht bekannt ist. Es sind daher schon eine Reihe von Vorschlägen entwickelt worden, unter Zuhilfenahme von zwischengeschalteten Vermittlern solche Verbindungen aufzubauen. So schlägt die JP 9-21722A ein Verfahren vor, bei dem einem Vermittler die Zieladresse bekannt ist, bei dem die Bestimmungsadresse in geeigneter Form hinterlegt wurde. Fällt allerdings der Vermittler aus, kommt keine Verbindung zustande. Wesentlich ist auch, dass der angesprochene Zielrechner schon online sein muss, wenn er gerufen werden soll. Ein ähnliches System wird auch in der EP 08 56 981 A2 und in der WO 97/14234 eingesetzt.

Bei weiteren Verfahren, wie beispielsweise in der WO 97/33412 vorgeschlagen, wird eine sehr komplexe und auf allen Seiten einheitliche Infrastruktur vorausgesetzt, bei der die jeweiligen Provider in der Lage sind, Rückrufe über ein weiteres Netz zu generieren und zu unterstützen. Solche Verfahren stellen eine erhebliche Einschränkung dar und sind recht unwirtschaftlich. Sie haben sich daher auch nicht durchgesetzt.

Aufgabe der vorliegenden Erfindung ist es demgegenüber, ein Verfahren vorzuschlagen, bei dem lediglich wenig aufwendige technische Maßnahmen getroffen werden müssen und keine zusätzlichen Geräte eingesetzt werden müssen, die nicht ohnehin stets vorhanden sind.

Diese Aufgabe wird durch ein Verfahren zum Aufbau von Verbindungen zwischen zwei Kommunikationspartnern die beide über einen Zugang zu einem Kommunikationssystem mit einer dynamischen Adresszuteilung verfügen, und die beide über einen Zugang zu einem Kommunikationssystem mit einer statischen Adresszuteilung verfügen, mit folgenden Schritten:
- der erste Kommunikationspartner meldet sich bei dem System mit dynamischer Adresszuteilung an,
- das System mit dynamischer Adresszuteilung teilt dem ersten Kommunikationspartner aus einem Adressreservoir eine dynamische Adresse zu,
- der erste Kommunikationspartner ermittelt die ihm zugeteilte dynamische Adresse,
- der erste Kommunikationspartner baut unter Aufrechterhaltung vorgenannter Anmeldung eine Verbindung über das zweite Kommunikationssystem mit der statischen Adresszuteilung zu dem zweiten Kommunikationspartner auf,
- der erste Kommunikationspartner teilt dem zweiten Kommunikationspartner über diese Verbindung in dem zweiten Kommunikationssystem mit der statischen Adresszuteilung die zuvor erworbene eigene erste dynamische Adresse mit,
- der erste Kommunikationspartner fordert durch Austausch einer Datensequenz den zweiten Kommunikationspartner zum Eintritt in eine Kommunikation über das erste Kommunikationssystem auf,
- die Kommunikationspartner lösen die Verbindung in dem Kommunikationssystem mit der statischen Adresszuteilung,
- der zweite Kommunikationspartner meldet sich bei dem ersten Kommunikationssystem mit der dynamischen Adresszuteilung an,
- das Kommunikationssystem mit der dynamischen Adresszuteilung teilt dem zweiten Kommunikationspartner eine zweite dynamische Adresse zu,
- der zweite Kommunikationspartner ermittelt die ihm zugeteilte zweite dynamische Adresse,
- der zweite Kommunikationspartner kontaktiert den ersten Kommunikationspartner unter der zuvor ermittelten ersten dynamischen Adresse in dem Kommunikationssystem mit der dynamischen Adresszuteilung und übergibt ihm die zweite dynamische Adresse.

Mit einer derartigen Konzeption wird das Problem überraschend gelöst. Einen Zugang über ein Kommunikationssystem mit statischer Adress-Struktur ist praktisch stets vorhanden. Dieses herkömmliche, stets vorhandene zweite Kommunikationssystem wird nun benutzt, um die bisher so problematische Situation beim Aufbau von Punkt-zu-Punkt-Verbindungen in Kommunikationssystemen mit dynamischer Adresszuteilung zu lösen. Durch das vorgeschlagene Verfahren werden den beiden Kommunikationspartnern untereinander die dynamischen Adressen der jeweils anderen Kommunikationspartnern mitgeteilt und zugleich die Verbindung aufgebaut.

Nur sehr kurzzeitig werden entfemungsabhängige Kosten während des Verbindungsaufbaus in dem Kommunikationssystem mit der statischen Adresszuteilung anfallen. Danach ist nur noch die deutlich kostengünstigere, weil entfernungsunabhängige, Verbindung über das erste Kommunikationssystem mit der dynamischen Adresszuteilung erforderlich. Dieses Verfahren ist damit deutlich kostengünstiger als herkömmliche Verfahren, es ist nicht abhängig von externen Vermittlungsstellen und zu überbrückenden Distanzen.

Bevorzugt kann als zweites Kommunikationssystem mit der statischen Adresszuteilung ein Telefonnetz verwendet werden. Es kann sich um das bekannte Telefonnetz (Public Switched Telephone Network, PSTN), aber auch um ähnlich aufgebaute oder andere Netze handeln.

Das erste Kommunikationssystem mit der dynamischen Adresszuteilung ist bevorzugt ein paketvermitteltes Netzwerk (Packet Switched Network), insbesondere das Internet.

Die Datensequenz, mit der der erste Kommunikationspartner den zweiten Kommunikationspartner zum Einwilligen in den Aufbau einer Kommunikation auffordert, kann bevorzugt auch Daten zur Verabredung über die für die Kommunikation zu nutzende Verschlüsselungsverfahren enthalten und/oder Daten zur eindeutigen Beschreibung der Identität der jeweiligen Systeme und/oder Steuersignale für Prozesse nach dem Aufbau der Kommunikationsverbindung und/oder Daten zur einseitigen Kostenübernahme enthalten.

Die Erfindung ist auch dann mit Erfolg einsetzbar, wenn einer der beiden Kommunikationspartner auch in dem Kommunikationssystem mit der dynamischen Adresszuteilung über eine feste beziehungsweise statische Adresse verfügt. Solche Adressen besitzen beispielsweise Unternehmen, EDV-Dienstleister, Provider, etc. Gerade im Rahmen der zunehmenden kommerziellen Nutzung des Internets (sogenannter E-commerce) wird es für solche Kommunikationspartner interessant, entsprechende Verbindungen zu Teilnehmern ohne statische beziehungsweise feste Adresse aufzubauen.

Diese Aufgabe lässt sich durch eine vereinfachte Verfahrensform des erfindungsgemäßen Verfahrens lösen, nämlich durch ein Verfahren zum Aufbau von Verbindungen zwischen zwei Kommunikationspartnern (A, B) lösen, die beide über einen Zugang zu einem Kommunikationssystem (1) mit einer dynamischen Adresszuteilung verfügen, und die beide über einen Zugang zu einem Kommunikationssystem (2) mit einer statischen Adresszuteilung verfügen, wobei der erste Kommunikationspartner (A) auch im Kommunikationssystem (1) mit der dynamischen Adresszuteilung über eine feste Adresse verfügt, mit folgenden Schritten:
- der erste Kommunikationspartner (A) baut eine Verbindung über das zweite
- Kommunikationssystem (2) mit der statischen Adresszuteilung zu dem zweiten Kommunikationspartner (B) auf,
- der erste Kommunikationspartner (A) teilt dem zweiten Kommunikationspartner (B) über diese Verbindung in dem zweiten Kommunikationssystem (2) mit der statischen Adresszuteilung seine feste Adresse aus dem ersten System (1) mit,
- der erste Kommunikationspartner (A) fordert durch Austausch einer Datensequenz (5) den zweiten Kommunikationspartner (B) zum Eintritt in eine Kommunikation über das erste Kommunikationssystem (1) auf,
- die Kommunikationspartner (A, B) lösen die Verbindung in dem Kommunikationssystem (2) mit der statischen Adresszuteilung,
- der zweite Kommunikationspartner (B) meldet sich bei dem ersten Kommunikationssystem (1) mit der dynamischen Adresszuteilung an,
- das Kommunikationssystem (1) mit der dynamischen Adresszuteilung teilt dem zweiten Kommunikationspartner (B) eine zweite dynamische Adresse zu,
- der zwerte Kommunikationspartner (B) ermittelt die ihm zugeteilte zweite dynamische Adresse,
- der zwerte Kommunikationspartner (B) kontaktiert den ersten Kommunikationspartner (A) unter der ihm zuvor mitgeteilten festen Adresse in dem Kommunikationssystem (1) mit der dynamischen Adresszuteilung und übergibt ihm die zweite dynamische Adresse.

Der Begriff "Kommunikationspartner" ist nicht eng auszulegen. Es kann sich auch um rein technische Einrichtungen, wie beispielsweise Großrechnemetze von Institutionen an weit voneinander entfernten Orten handeln, die miteinander große Datenmengen austauschen möchten, auch um Vermittlungsstellen, die Videotelefonate vermitteln, usw. Eine manuelle Zwischenschaltung erfolgt nicht beziehungsweise ist nicht erforderlich. Der gesamte Aufbau kann automatisch erfolgen.

Es lassen sich über das Internet oder andere Kommunikationssysteme mit dynamischen Adresszuteilungen damit Sprachverbindungen, Faxverbindungen und Datenverbindungen aufbauen, deren anfallende Kosten nicht entfernungsabhängig sind. Gerade der Datenaustausch von weit entfernten Kommunikationspartnern führt zu einer sehr günstigen Kostensituation. Von besonderem Vorteil ist es, wenn bei einer Verwendung des Telefonnetzes als Kommunikationssystem mit statischer Adresszuteilung der Verbindungsaufbau über einen ISDN-Anschluss erfolgt und zwar über den D-Kanal, während er zugleich über den B-Kanal sich über seinen lokalen Provider in das Internet einwählt und dort auf diese Weise eine dynamische Adresse, vorzugsweise die sogenannte IP-Adresse, zugeteilt erhält.

Durch die Erfindung lassen sich die technischen Möglichkeiten von Kommunikationssystemen wie dem Internet effizienter nutzen, zum Beispiel die größere Bandbreite, die höheren Übertragungsraten, die geringe Störanfälligkeit usw., insbesondere im Vergleich zu herkömmlichen Telefonverbindungen.

Das erfindungsgemäße Verfahren kann durch integrierte Schaltkreise in zusätzlichem Einbau in Telekommunikationsapparate ebenso wie durch geeignete Softwaretools realisiert beziehungsweise implementiert werden.

Die erfindungsgemäße Lösung bedient sich zum Verbindungsaufbau gewissermaßen einer Bypass-Lösung. Dabei wird durch die kurzzeitige Zuschaltung eines Kommunikationssystems mit statischer Adress-Struktur (PSTN), beispielsweise unter Ausnutzung der ISDN-Merkmale, der D-Kanal in idealer Weise dazu genutzt, neben der Rufnummer auch die dynamische Adresse zu übertragen, um so die Punkt-zu-Punkt-Verbindung für paketvermittelte Systeme zu initiieren. Dadurch entfallen selbst die entfernungsabhängigen Kosten während des Verbindungsaufbaus.

Im Folgenden wird anhand der Zeichnung ein Ausführungsbeispiel im Einzelnen erläutert. Es zeigen:

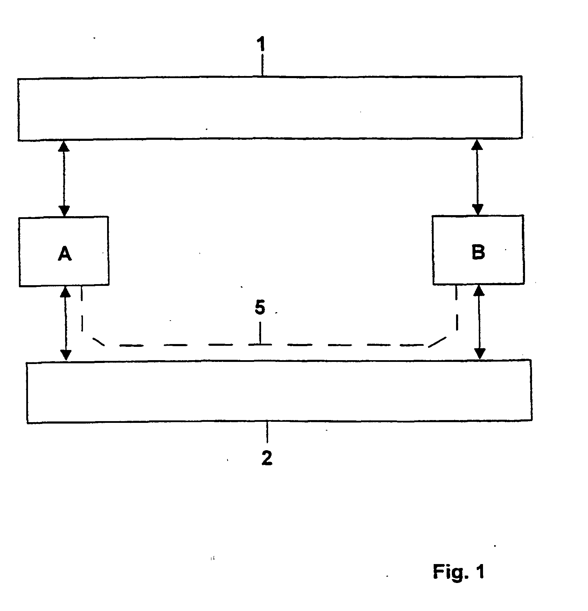

**Figur 1** eine schematische Darstellung eines Aufbaus einer erfindungsgemäßen Verbindung.

Die Figur 1 zeigt einen Kommunikationspartner A, der mit einem Kommunikationspartner B kommunizieren möchte, und zwar rein beispielshalber zum Zwecke eines Videotelefonats. Dabei kann man sich den Kommunikationspartner A etwa in Deutschland und den Kommunikationspartner B in den U.S.A. vorstellen. Beide Kommunikationspartner besitzen dabei einen Zugang zu einem ersten Kommunikationssystem 1 mit einer dynamischen Adresszuteilung, also beispielsweise verfügen beide über einen Rechner mit Internetanschluss und dem entsprechenden Gerät zur Durchführung des Videotelefonats, ferner verfügen beide über einen Zugang zu einem zweiten Kommunikationssystem 2 mit einer statischen Adresszuteilung, also zum Beispiel über einen Telefonanschluss.

Der erste Kommunikationspartner A beziehungsweise sein Rechner in Deutschland meldet sich zunächst bei dem ersten Kommunikationssystem 1 mit der dynamischen Adresszuteilung an, zum Beispiel bei seinem Internet-Service-Provider. Dieser teilt ihm dort aus einem Adressreservoir eine Adresse, hier im Beispiel eine Internet-Adresse, zu. Diese eigene Adresse wird vom Kommunikationspartner A beziehungsweise durch seinen Rechner ermittelt. Zugleich oder danach wird über das zweite Kommunikationssystem 2 mit der statischen Adresszuteilung, also das Telefonnetz, eine zweite Verbindung zu der bekannten statischen Adresse des zweiten Kommunikationspartners B in den U.S.A. aufgebaut. Es entsteht also eine herkömmliche Telefonverbindung. Dabei wird der Kommunikationspartner B anhand einer Datensequenz 5 oder Steuerbefehlssequenz aufgefordert, in das Videotelefonat aus Deutschland mit dem dortigen ersten Kommunikationspartner A einzuwilligen.

Diese Datensequenz 5 kann auch zusätzlich noch Daten betreffend einer Verabredung über notwendige Verschlüsselungen oder Abbruchmöglichkeiten enthalten. Nachdem diese Übermittlung der Datensequenz und die Aufforderung in die Einwilligung erfolgt sind, wird die Verbindung über das zweite Kommunikationssystem 2 mit der statischen Adress-Struktur beendet, also das Telefonat zwischen Deutschland und den U.S.A. abgeschlossen.

Während des ganzen Zeitraums bleibt die Anmeldung bei dem ersten Kommunikationssystem 1 aufrecht erhalten. Der Kommunikationspartner B in den U.S.A. beziehungsweise sein Rechner meldet sich nun seinerseits bei dem ersten Kommunikationssystem 1 mit der dynamischen Adresszuteilung, beispielsweise bei seinem Internet-Service-Provider, an. Dieser teilt ihm eine dynamische Adresse zu. Der Kommunikationspartner B ermittelt nun seine dynamische, ihm zugeteilte Adresse.

Anschließend baut er mit der ihm ja zuvor übermittelten dynamischen Adresse des ersten Kommunikationspartners A eine Verbindung auf und teilt diesem seine dynamische Adresse mit.

Nunmehr besitzen beide Kommunikationspartner Kenntnis über die dynamische Adresse des jeweils anderen Kommunikationspartners. Sie können nun über die zustande gekommene Leitung das verabredete und angestrebte Videotelefonat führen.

Bei diesem Verfahren werden nur sehr kurzzeitig entfemungsabhängige Gebühren in dem zweiten Kommunikationssystem 2 mit der statischen Adresszuteilung erforderlich.

### Bezugszeichenliste

- 1: erstes Kommunikationssystem mit dynamischer Adresszuteilung
- 2: zweites Kommunikationssystem mit statischer Adresszuteilung
- 5: Datensequenz
- A: erster Kommunikationspartner
- B: zweiter Kommunikationspartner

## Patentansprüche

1. Verfahren zum Aufbau von Verbindungen zwischen zwei Kommunikationspartnern (A, B), die beide über einen Zugang zu einem Kommunikationssystem (1) mit einer dynamischen Adresszuteilung verfügen, und die beide über einen Zugang zu einem Kommunikationssystem (2) mit einer statischen Adresszuteilung verfügen, mit folgenden Schritten:
- der erste Kommunikationspartner (A) meldet sich bei dem System (1) mit dynamischer Adresszuteilung an,
- das System (1) mit dynamischer Adresszuteilung teilt dem ersten Kommunikationspartner (A) aus einem Adressreservoir eine dynamische Adresse zu,
- der erste Kommunikationspartner (A) ermittelt die ihm zugeteilte dynamische Adresse,
- der erste Kommunikationspartner (A) baut unter Aufrechterhaltung vorgenannter Anmeldung eine Verbindung über das zweite Kommunikationssystem (2) mit der statischen Adresszuteilung zu dem zweiten Kommunikationspartner (B) auf,
- der erste Kommunikationspartner (A) teilt dem zweiten Kommunikationspartner (B) über diese Verbindung in dem zweiten Kommunikationssystem (2) mit der statischen Adresszuteilung die zuvor erworbene eigene erste dynamische Adresse mit,
- der erste Kommunikationspartner (A) fordert durch Austausch einer Datensequenz (5) den zweiten Kommunikationspartner (B) zum Eintritt in eine Kommunikation über das erste Kommunikationssystem (1) auf,
- die Kommunikationspartner (A, B) lösen die Verbindung in dem Kommunikationssystem (2) mit der statischen Adresszuteilung,
- der zweite Kommunikationspartner (B) meldet sich bei dem ersten Kommunikationssystem (1) mit der dynamischen Adresszuteilung an,
- das Kommunikationssystem (1) mit der dynamischen Adresszuteilung teilt dem zweiten Kommunikationspartner (B) eine zweite dynamische Adresse zu,
- der zweite Kommunikationspartner (B) ermittelt die ihm zugeteilte zweite dynamische Adresse,
- der zweite Kommunikationspartner (B) kontaktiert den ersten Kommunikationspartner (A) unter der zuvor ermittelten ersten dynamischen Adresse in dem Kommunikationssystem (1) mit der dynamischen Adresszuteilung und übergibt ihm die zweite dynamische Adresse.

2. Verfahren zum Aufbau von Verbindungen zwischen zwei Kommunikationspartnern (A, B), die beide über einen Zugang zu einem Kommunikationssystem (1) mit einer dynamischen Adresszuteilung verfügen, und die beide über einen Zugang zu einem Kommunikationssystem (2) mit einer statischen Adresszuteilung verfügen, wobei der erste Kommunikationspartner (A) auch im Kommunikationssystem (1) mit der dynamischen Adresszuteilung über eine feste Adresse verfügt, mit folgenden Schritten:
- der erste Kommunikationspartner (A) baut eine Verbindung über das zweite Kommunikationssystem (2) mit der statischen Adresszuteilung zu dem zweiten Kommunikationspartner (B) auf,
- der erste Kommunikationspartner (A) teilt dem zweiten Kommunikationspartner (B) über diese Verbindung in dem zweiten Kommunikationssystem (2) mit der statischen Adresszuteilung seine feste Adresse aus dem ersten System (1) mit,
- der erste Kommunikationspartner (A) fordert durch Austausch einer Datensequenz (5) den zweiten Kommunikationspartner (B) zum Eintritt in eine Kommunikation über das erste Kommunikationssystem (1) auf,
- die Kommunikationspartner (A, B) lösen die Verbindung in dem Kommunikationssystem (2) mit der statischen Adresszuteilung,
- der zweite Kommunikationspartner (B) meldet sich bei dem ersten Kommunikationssystem (1) mit der dynamischen Adresszuteilung an,
- das Kommunikationssystem (1) mit der dynamischen Adresszuteilung teilt dem zweiten Kommunikationspartner (B) eine zweite dynamische Adresse zu,
- der zweite Kommunikationspartner (B) ermittelt die ihm zugeteilte zweite dynamische Adresse,
- der zweite Kommunikationspartner (B) kontaktiert den ersten Kommunikationspartner (A) unter der ihm zuvor mitgeteilten festen Adresse in dem Kommunikationssystem (1) mit der dynamischen Adresszuteilung und übergibt ihm die zweite dynamische Adresse.

3. Verfahren nach Anspruch 1 oder 2,
**dadurch gekennzeichnet,**
**dass** das erste Kommunikationssystem (1) mit der dynamischen Adresszuteilung ein paketvermitteltes Netzwerk ist.

4. Verfahren nach Anspruch 3,
**dadurch gekennzeichnet,**
**dass** das paketvermittelte Netzwerk das Internet ist.

5. Verfahren nach einem der vorstehenden Ansprüche,
**dadurch gekennzeichnet,**
**dass** das zwerte Kommunikationssystem (2) mit der statischen Adresszuteilung ein Telefonnetz ist.

6. Verfahren nach einem der vorstehenden Ansprüche,
**dadurch gekennzeichnet,**
**dass** die Datensequenz (5), die von dem ersten Kommunikationspartner (A) an den zwerten Kommunikationspartner (B) übermittelt wird, um diesen zum Eintritt in die Kommunikation aufzufordern, außerdem Daten zur Verabredung über die für die Kommunikation zu nutzende Verschlüsselungsverfahren enthält und/oder Daten zur eindeutigen Beschreibung der Identität der jeweiligen Systeme enthält und/oder Steuersignale für Prozesse nach dem Aufbau der Kommunikationsverbindung und/oder Daten zur einseitigen Kostenubernahme enthält.

7. Verfahren nach Anspruch 5 oder Anspruch 6,
**dadurch gekennzeichnet,**
**dass** bei einer Verwendung des Telefonnetzes als zweites Kommunikationssystem (2) der Verbindungsaufbau über den D-Kanal eines ISDN-Anschlusses erfolgt und über einen B-Kanal eine Einwahl in das erste Kommunikationssystem (1), bevorzugt das Internet, erfolgt.

## Claims

1. Method for establishing connections between two communication partners (A, B) that both have an access to a communication system (1) with a dynamic address allocation, and that both have an access to a communication system (2) with a static address allocation, with the following steps:
• the first communication partner (A) logs onto the system (1) with the dynamic address allocation,
• the system (1) with the dynamic address allocation allocates a dynamic address to the first communication partner (A) from an address bank,
• the first communication partner (A) determines the dynamic address allocated to him,
• while maintaining the aforementioned logon, the first communication partner (A) establishes a connection to the second communication partner (B) via the second communication system (2) with the static address allocation,
• the first communication partner (A) notifies the second communication partner (B) of his own previously acquired first dynamic address via this connection in the second communication system (2) with the static address allocation,
• by exchanging a data sequence (5), the first communication partner (A) prompts the second communication partner (B) to enter into a communication via the first communication system (1),
• the communication partners (A, B) disconnect the connection in the communication system (2) with the static address allocation,
• the second communication partner (B) logs onto the first communication system (1) with the dynamic address allocation,
• the communication system (1) with the dynamic address allocation allocates a second dynamic address to the second communication partner (B),
• the second communication partner (B) determines the second dynamic address allocated to him,
• the second communication partner (B) contacts the first communication partner (A) under the previously determined first dynamic address in the communication system (1) with the dynamic address allocation and forwards the second dynamic address to him.

2. Method for establishing connections between two communication partners (A, B) that both have an access to a communication system (1) with a dynamic address allocation, and that both have an access to a communication system (2) with a static address allocation, wherein the first communication partner (A) also has a fixed address in the communication system (1) with the dynamic address allocation, with the following steps:
• the first communication partner (A) establishes a connection to the second communication partner (B) via the second communication system (2) with the static address allocation,
• the first communication partner (A) notifies the second communication partner (B) of his fixed address from the first system (1) via this connection in the second communication system (2) with the static address allocation,
• by exchanging a data sequence (5), the first communication partner (A) prompts the second communication partner (B) to enter into a communication via the first communication system (1),
• the communication partners (A, B) disconnect the connection in the communication system (2) with the static address allocation,
• the second communication partner (B) logs onto the first communication system (1) with the dynamic address allocation,
• the communication system (1) with the dynamic address allocation allocates a second dynamic address to the second communication partner (B),
• the second communication partner (B) determines the second dynamic address allocated to him,
• the second communication partner (B) contacts the first communication partner (A) under the fixed address previously notified to him in the communication system (1) with the dynamic address allocation and forwards the second dynamic address to him.

3. Method according to Claim 1 or 2, **characterised in that** the first communication system (1) with dynamic address allocation is a packet switched network.

4. Method according to Claim 3, **characterised in that** the packet switched network is the internet.

5. Method according to one of the preceding claims, **characterised in that** the second communication system (2) with the static address allocation is a telephone network.

6. Method according to one of the preceding claims, **characterised in that** the data sequence (5), which is forwarded by the first communication partner (A) to the second communication partner (B) in order to prompt the latter to enter into the communication, additionally contains data concerning the appointment about the coding process to be used for the communication, and/or contains data for the unambiguous description of the identity of the respective systems, and/or contains control signals for processes after the establishment of the communication connection and/or data for one party to assume costs.

7. Method according to Claim 5 or Claim 6, **characterised in that** in the case of use of the telephone network as the second communication system (2), the connection is established via the D-channel of an ISDN connection, and dialling into the first communication system (1), preferably the internet, is achieved via a B-channel.

## Revendications

1. Procédé destiné à établir des liaisons entre deux partenaires de communication (A, B), qui disposent tous deux d'un accès à un système de communication (1) avec une attribution dynamique d'adresses, et qui disposent tous deux d'un accès à un système de communication (2) avec une attribution statique d'adresses, comprenant les étapes suivantes :
- le premier partenaire de communication (A) ouvre une session dans le système (1) avec l'attribution dynamique d'adresses,
- le système (1) avec l'attribution dynamique d'adresses attribue une adresse dynamique au premier partenaire de communication (A) prélevée dans un réservoir d'adresses,
- le premier partenaire de communication (A) détecte l'adresse dynamique qui lui est attribuée,
- le premier partenaire de communication (A), en maintenant l'ouverture de session susmentionnée, établit une liaison avec le deuxième partenaire de communication (B) via le deuxième système de communication (2) avec l'attribution statique d'adresses,
- le premier partenaire de communication (A), via cette liaison dans le deuxième système de communication (2) avec l'attribution statique d'adresses, communique au deuxième partenaire de communication (B) sa propre première adresse dynamique obtenue précédemment,
- le premier partenaire de communication (A), via l'échange d'une séquence de données (5), demande au deuxième partenaire de communication (B) d'entrer dans une communication via le premier système de communication (1),
- les partenaires de communication (A, B) mettent fin à la liaison dans le système de communication (2) avec l'attribution statique d'adresses,
- le deuxième partenaire de communication (B) ouvre une session dans le premier système de communication (1) avec l'attribution dynamique d'adresses,
- le système de communication (1) avec l'attribution dynamique d'adresses attribue au deuxième partenaire de communication (B) une deuxième adresse dynamique,
- le deuxième partenaire de communication (B) détecte la deuxième adresse dynamique qui lui est attribuée,
- le deuxième partenaire de communication (B) contacte dans le système de communication (1) avec l'attribution dynamique d'adresses le premier partenaire de communication (A) sous la première adresse dynamique obtenue précédemment et lui transmet la deuxième adresse dynamique.

2. Procédé destiné à établir des liaisons entre deux partenaires de communication (A, B), qui disposent tous deux d'un accès à un système de communication (1) avec une attribution dynamique d'adresses, et qui disposent tous deux d'un accès à un système de communication (2) avec une attribution statique d'adresses, le premier partenaire de communication (A) disposant également d'une adresse fixe dans le système de communication (1) avec l'attribution dynamique d'adresses, comprenant les étapes suivantes :
- le premier partenaire de communication (A) établit une liaison, via le deuxième système de communication (2) avec l'attribution statique d'adresses, vers le deuxième partenaire de communication (B),
- le premier partenaire de communication (A), via cette liaison dans le deuxième système de communication (2) avec l'attribution statique d'adresses, communique au deuxième partenaire de communication (B) son adresse fixe obtenue dans le premier système (1),
- le premier partenaire de communication (A), via l'échange d'une séquence de données (5), demande au deuxième partenaire de communication (B) d'entrer dans une communication via le premier système de communication (1),
- les partenaires de communication (A, B) mettent fin à la liaison dans le système de communication (2) avec l'attribution statique d'adresses,
- le deuxième partenaire de communication (B) ouvre une session dans le premier système de communication (1) avec l'attribution dynamique d'adresses,
- le système de communication (1) avec l'attribution dynamique d'adresses attribue au deuxième partenaire de communication (B) une deuxième adresse dynamique,
- le deuxième partenaire de communication (B) détecte la deuxième adresse dynamique qui lui est attribuée,
- le deuxième partenaire de communication (B) contacte dans le système de communication (1) avec l'attribution dynamique d'adresses le premier partenaire de communication (A) sous la première adresse dynamique qui lui a été communiquée précédemment et lui transmet la deuxième adresse dynamique.

3. Procédé selon la revendication 1 ou 2, **caractérisé en ce que** le premier système de communication (1) avec l'attribution dynamique d'adresses est un réseau de transmission par paquets.

4. Procédé selon la revendication 3, **caractérisé en ce que** le réseau de transmission par paquets est le réseau Internet.

5. Procédé selon l'une quelconque des revendications précédentes, **caractérisé en ce que** le deuxième système de communication (2) avec l'attribution statique d'adresses est un réseau téléphonique.

6. Procédé selon l'une quelconque des revendications précédentes, **caractérisé en ce que** la séquence de données (5), qui est transmise par le premier partenaire de communication (A) vers le deuxième partenaire de communication (B), en vue de demander à celui-ci d'entrer dans la communication, contient par ailleurs des données pour convenir du procédé de codage à utiliser pour la communication et/ou contient des données pour la description univoque de l'identité de chacun des systèmes et/ou contient des signaux de commande pour des processus après l'établissement de la liaison de communication et/ou des données pour une prise en charge unilatérale des coûts.

7. Procédé selon la revendication 5 ou 6, **caractérisé en ce que**, en cas d'utilisation d'un réseau téléphonique pour former le deuxième système de communication (2), la liaison est établie via le canal D d'une connexion RNIS et une entrée en communication avec le premier système de communication (1), de préférence Internet, s'établit via un canal B.
